# EUROPEAN PATENT SPECIFICATION

(11) **EP 4 321 068 B1**
(45) Date of publication and mention of the grant of the patent: **29.07.2026**
(21) Application number: 22382766.8
(22) Date of filing: 08.08.2022
(51) Int. Cl.: A47J 31/54

(54) **BOILER FOR COFFEE VENDING MACHINES**
BOILER FÜR KAFFEEVERKAUFSAUTOMATEN
CHAUDIÈRE POUR MACHINES DE VENTE DE CAFÉ

(43) Date of publication of application: 14.02.2024
(73) Proprietor: Jofemar, S.A., 31350 Peralta (Navarra) (ES)
(72) Inventor: GUINDULAIN VIDONDO, Jesús, 31350 Peralta (Navarra) (ES)
(74) Representative: Pons IP

(56) References cited:
- WO-A2-2008/044180
- DE-B4- 10 317 353
- US-B1- 6 442 341

## Description

### OBJECT OF THE INVENTION

The present invention relates to a boiler for coffee vending machines, which is intended for being placed vertically inside a vending machine, also known as a vending coffee machine, and for heating water to prepare coffee, wherein the boiler comprises a first body with an integrated resistance, a metal plate attached thereto, and a second body attached to the first body generating, together with the plate, a tank with a water inlet and a water outlet at opposite ends of the tank, wherein the water is heated by means of contact with the plate.

The resistance is therefore not in direct contact with water, preventing deterioration and maintenance problems, a quick transmission of heat to water is ensured, and water entering at a cold temperature is prevented from being led directly to the outlet without having been previously heated.

### BACKGROUND OF THE INVENTION

There are many boilers on the market intended for being installed in vending coffee machines with different sensor configurations, materials, sizes, and heat source integration methods, to seek rapid transmission of heat to water and minimise maintenance of said boilers as much as possible.

The heating of water is associated with a series of problems such as the precipitation of lime inside the boiler, the difficulties in cleaning same, the blockage of hot water outlet pipes, the rupturing of resistances due to chlorine, etc. Working with water of different pH values may cause etching on the materials of the boiler itself, and therefore the deterioration of the different components forming same.

Another known problem is the deposition of lime on temperature sensors which are contained in the boiler and in contact with water. These deposits gradually cause the measurements of said sensor to change, deviating from the real temperature, since lime works as an insulator when it settles on the probe.

In most boilers on the market, the resistance is in direct contact with the water that it has to heat, and therefore it is the hottest element on which the different elements contained in the water, such as lime, settle and adhere. These calcareous scales do not come off easily and in most cases it is necessary to use chemical scale removers in order to be able to clean the different components of the boiler. These chemical components must be removed after cleaning with the help of several washes with water until it is ensured that no trace of said components remains in the boiler, since the water entering said boiler will be supplied later on in the coffee.

There are other boilers in which there is no accumulation of water since the water therein is heated by coils of tubes over-injected in an aluminium block together with a resistance. The resistance simultaneously heats the aluminium block and the tubes transporting water that will be used to prepare coffee. Water is therefore heated right at the moment coffee is requested, so they are formed by tubes having very small diameters and a long path so that the necessary heat exchange can take place. Since they are small and have high temperatures, lime deposits which cause very early blockages are produced on the walls.

For example, document EP2429357B1 discloses a boiler for a hot beverage preparation machine, comprising a body and a support intended for cooperating with the body to define at least one fluid heating chamber. The support comprises a recess in which a flat diffusing element having a heating element is placed. When the screen-printed resistance is powered by electricity, it produces heat which is transmitted to the diffuser and then to the liquid occupying the heating chamber.

Also, document WO2008/044180A2 discloses a steam generator (10) that comprises an assembly of an outer tube (30) and an inner tube (20). In one embodiment, the inner tube (20) serves for spraying water on an inner surface (31) of the outer tube (30), wherein the outer tube (30) is heatable by means of heating elements (32). The inner tube (20) comprises a number of openings (21) which are arranged along the length of the tube (20). When water is sprayed from these openings (21) during operation of the steam generator (10), evaporation of the water to steam takes place as soon as the water reaches the inner surface (31) of the outer tube (30). Due to the fact that only a tube (30), i.e. a component having a relatively thin wall is heated during operation of the steam generator (10), heating up and cooling down of the steam generator (10) does not take much time, and controlling a temperature of the inner surface (31) of the outer tube (30) is relatively easy.

Therefore, as observed, in the boilers mentioned in the state of the art, either the resistances are in direct contact with the water to be heated, or the holes through which the water circulates are very narrow, with the aforementioned problems that this entails.

### DESCRIPTION OF THE INVENTION

The present invention is defined in claim 1 and relates to a boiler for coffee vending machines intended for being placed vertically inside a coffee machine and for heating water to prepare coffee. The boiler comprises a first metal body provided with an electrical resistance integrated therein and an outer face, as well as a metal plate linked to the outer face of the first body receiving heat from same, and a second partially convex body linked on the perimeter to the outer face of the first body and defining a water tank with the plate.

Specifically, the second body is provided with a lower sector having a through inlet cavity facing the plate which extends from the tank and is intended for being connected to a water network introducing water into the tank, and an upper sector, opposite the lower sector, which is intended for being located above the lower sector according to a vertical direction in an assembled situation and which is provided with a through water outlet cavity which extends from the tank and is intended for being connected with a distribution mechanism of the coffee machine and evacuate heated water towards same.

The resistance, which is integrated in the first body, therefore heats the water by means of the first body and the plate, without coming into contact therewith, preventing the problems present in the state of the art, such as the precipitation of lime inside the boiler, the difficulties in cleaning same, the blockage of hot water outlet pipes, the rupturing of resistances due to chlorine, etc.

Cold water which collides with the plate, which is the hottest part, therefore enters through the inlet cavity, preventing this water from flowing directly towards the outlet. The plate is the area in contact with the water that heats up the most, and therefore it is where there is the highest possibility of solid residues precipitating, for this reason it is intentionally designed with a completely flat shape to facilitate cleaning or possible replacement, if necessary, at a very low cost.

The already heated water then moves up towards the outlet cavity which communicates with the distributor that manages and distributes the openings of the circuit depending on the product requested from the machine and evacuates water from the tank. Water inlet and outlet tubes are preferably housed in these cavities.

Preferably, inlet and outlet adapters, which are welded on the convex area of the second body, extend from the cavities. The water inlet and outlet adapters are designed such that there are no narrowings on which calcareous residues which block the outlet may settle.

The second body can be provided with a blind temperature adapter which extends towards the tank, in the proximity of the water outlet, in order to capture the temperature of the water at the outlet point. A probe which provides the temperature of the water inside the boiler right at the outlet point and serves as a support to manage heat input from the resistance is screwed externally onto this blind adapter. Since the temperature sensor or probe is not in contact with water, the measurements of said sensor are prevented from changing, deviating from the real temperature.

Preferably, the first body is made of aluminium and the plate is made of stainless steel and forms one of the faces of the boiler. The second body is also made of stainless steel. The two parts forming the boiler are therefore made of a very robust material from the food viewpoint, i.e., stainless steel, in order to be able to handle water with different pH values without their surfaces deteriorating.

In order to optimize the heating of cold water, the boiler preferably has a cylindrical tubular element provided with an open end, a closed end, and a central sector therebetween, wherein the closed end comprises an inlet hole which is arranged at the height of the inlet cavity, allowing water to enter the inside of the tubular element, and the open end contacts the plate, heating the water inside the tubular element. The central sector includes a lower through opening through which water is discharged.

Therefore, water initially enters the inside of the tubular element, which is responsible for attenuating the turbulences caused by the flow of water and air dissolved in the water itself entering from the water network and for directing this water in the direction opposite the exit direction, lowering the speed of passage from the boiler to the tank, so that the cold water gradually fills the boiler from the bottom to the top, and thereby preventing unwanted flows of cold water directly towards the outlet cavity, and therefore to the coffee pod.

The tubular element is therefore retained between the plate and the second body, such that it guarantees the perimeter closure, ensuring that the incoming cold water only passes into the tank through the lower opening made thereon for this purpose.

To allow this part to close well against the plate of the boiler and to absorb the effect of contractions and dilations caused by heating, the tubular element comprises a conical lip which extends along the perimeter from the open end describing a widening towards the plate and is in contact with same, so as to facilitate the adaptation thereof to the measurement that exists at any given time between the two parts forming the boiler.

Furthermore, this tubular part may comprise a through hole in its central sector, intended for discharging the incoming air from the water inlet cavity and for being arranged above the lower opening according to a vertical direction in an assembled situation. The through hole allows the air entering with the water to exit in a controlled manner and without accumulating in the chamber created inside the tubular part, without causing turbulences leading to flows of cold water towards the outlet. Preferably, a bushing which is housed centered inside the inlet adapter extends from the inlet hole of the tubular element.

As a result of the tubular element, the arrival of water from when it enters the tank until it leaves through the outlet cavity can be delayed for more than 10 seconds, thus ensuring that the water which reaches the outlet cavity has had time to be heated and that the cold water from the inlet cavity does not directly reach the outlet cavity.

The second body, having a second central area in the shape of a half-shell, is the part which receives heat indirectly, and therefore it is a colder surface on which there are less calcareous scales. Even so, in order to facilitate cleaning, it has a design with very rounded surfaces that are therefore very easy to clean by brushing, without using chemicals. The two bodies are attached by screws which can be readily loosened to facilitate cleaning tasks.

The boiler, as it is intended for being placed vertically in a coffee machine, may accumulate lime that came off in the lower part of the tank, which will gradually fill up without causing any blockage. When cleaning is to be performed, it can be easily opened and accumulated solid residues can be removed manually.

It should be noted that the boiler is subject to continuous increases in pressure as a result of heating and of the actual pressure exerted by a pump in an espresso coffee dispensing service, and therefore the boiler system must be resistant to continuous fatigue, therefore at least one reinforcement which can be linked to the second body by means of attachment elements and is arranged on the second perimeter area can be incorporated. This reinforcement can be in the form of a ring that completely surrounds the second central area in the shape of a half-shell or it can be two bars that are arranged on each side of this second central area. The boiler also comprises an O-ring arranged along the perimeter of the plate. The reinforcements, together with the O-ring, guarantee the leaktightness of the system.

Preferably, the boiler comprises two casings made of polymeric material linked to one another in an assembled situation which generate an insulating envelope which minimises temperature losses of the boiler, and therefore improves the energy efficiency of the system, in addition of being a thermal protector which could prevent possible burn accidents, in maintenance actions.

The vertical design of the boiler and the contained volume, in addition to its external insulation, allow obtaining very small boilers and placing this component very close to other elements despite being a heating element, while at the same time obtaining a very efficient system from the energy viewpoint.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of a boiler for coffee vending machines.
Figure 2 shows an exploded perspective view of a boiler.
Figure 3 shows a perspective view of a tubular element arranged on a plate.
Figure 4 shows a front view of a boiler.
Figure 5 shows a section view according to the A-A section of the boiler of Figure 4.

### PREFERRED EMBODIMENT OF THE INVENTION

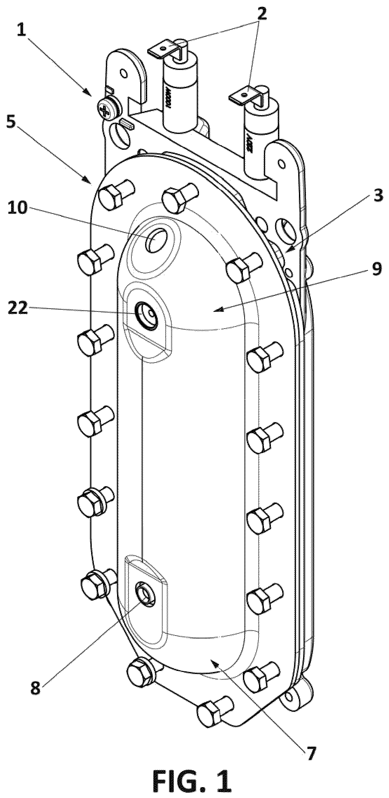

Figure 1 shows a perspective view of a boiler for coffee vending machines, intended for being placed vertically inside a coffee machine, as shown in the figure, and for heating water to prepare coffee.

The boiler comprises a first metal body (1) provided with an outer face (3) and an electrical resistance (2), which is integrated in the body and heats same. The boiler also comprises a metal plate (4) linked to the outer face (3) of the first body (1) receiving heat from same, not visible in the figure.

Likewise, the boiler comprises a second partially convex body (5) linked on the perimeter to the outer face (3) of the first body (1) and defining with the plate (4) a water tank (6) intended for housing the water to be heated.

The second body (5) is provided with a lower sector (7) having a through inlet cavity (8) which extends transversely from the tank (6) and is arranged facing the plate (4) and intended for being connected to a water network in order to introduce water into the tank (6), wherein the water introduced is at room temperature or is cold.

The second body (5) is also provided with an upper sector (9) opposite the lower sector (7) and intended for being located above the lower sector (7) according to a vertical direction in an assembled situation. The second body (5) is provided with a through water outlet cavity (10) which extends transversely from the tank (6) and is intended for being connected with a distribution mechanism of the coffee machine towards which the water heated water is discharged.

The cold water therefore enters through the inlet cavity (8) and collides with the plate (4), which has been heated by the first body (1) as a result of the electrical resistance (2) which is preferably over-injected. The water is thereby heated in an effective manner and discharged through the outlet cavity (10) to the coffee distribution mechanism, preventing the cold water entering through the inlet cavity (8) from being evacuated directly.

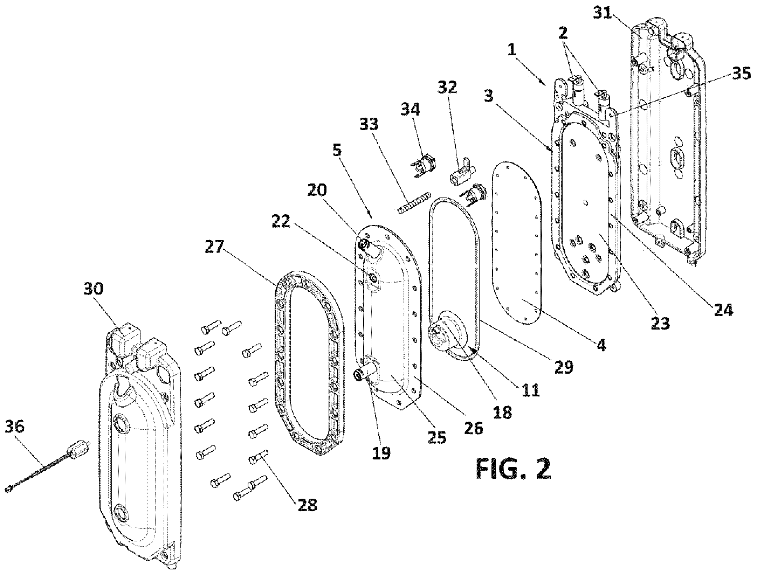

Figure 2 shows an exploded perspective view of the boiler according to the present invention which again depicts the first body (1) with the electrical resistance (2) with respective ends intended for being connected to an electrical power source, the outer face (3), the metal plate (4) which can be linked to the outer face (3), and the second body (5).

It can be seen that the second body (5) comprises an inlet adapter (19) which extends around the inlet cavity (8) and an outlet adapter (20) which extends from the outlet cavity (10), these adapters being welded to the convex or curved area of the second body (5).

The second body (5) further comprises a blind adapter (22) which extends towards the inside of the tank (6) and is arranged in the proximity of the water outlet cavity (10) and the boiler comprises a temperature probe (36) which can be housed in the blind adapter (22) such that the temperature of the exiting water is obtained.

The outer face (3) of the first body (1) comprises a first central area (23) and a first perimeter area (24) surrounding same, wherein the first central area (23) is flat and depressed with respect to the first perimeter area (24). The plate (4), which is flat, is housed inside the first central area (23), leaving the lip or first perimeter area (24) higher than said plate (4).

In turn, the second body (5) comprises a second central area (25) in the shape of a longitudinal half-shell, from which a second perimeter area (26) extends. The surface which is in contact with the water of the second body (5) is rounded and continuous, so as to prevent the deposition of lime.

It can also be seen that the boiler comprises an O-ring (29) arranged along the perimeter on the plate (4), protruding slightly from the first perimeter area (24) and providing leaktightness. This O-ring (29) is therefore limited by the relief of the first body (1) generated by the difference in height between the first central area (23) and the first perimeter area (24) of said first body (1), and by the body (5). Therefore, when the second perimeter area (26) is linked with the first perimeter area (24), the O-ring (29) is compressed.

The boiler also comprises at least one reinforcement (27) which in the embodiment shown is a ring linked to the second perimeter area (26) by means of attachment elements (28). Both the first perimeter area (24) and the second perimeter area (26), as well as the reinforcement (27), have made thereon a plurality of attachment through holes which house the attachment elements (28) in an assembled situation, keeping the bodies (1, 5) at the desired distance from one another. Since these attachment elements (28) are screws, manual uncoupling of the elements is allowed.

The boiler comprises two casings (30, 31) made of polymeric material linked to one another in an assembled situation surrounding the bodies (1, 5). A first casing (31) is arranged on the first body (1) and a second casing (30) is arranged on the second body (5). The second casing (30) has complementary holes made thereon for the three adapters (19, 20, 21) which allow a correct adaptation to the shape of the first body (1).

The boiler further comprises a manually operated trigger (32) which, together with the elastic element (33), which can be housed therein and in a tubular cavity of the second casing (30), serves to fix the boiler to the coffee machine such that it is not necessary to use a tool for its removal or placement.

It can also be seen that the boiler has thermal protectors (34) configured for being arranged in two upper protuberances (35) of the first body (1) to cut off the energy of the heating resistance when, due to an abnormal situation, the boiler exceeds a temperature, protecting the system from overheating such as, for example, the breakage of a control card or a relay controlling same.

To ensure that the cold water or room-temperature water which enters the tank is heated before reaching the outlet cavity (10), the boiler comprises a tubular element (11) which is housed in the tank (6) in an assembled situation.

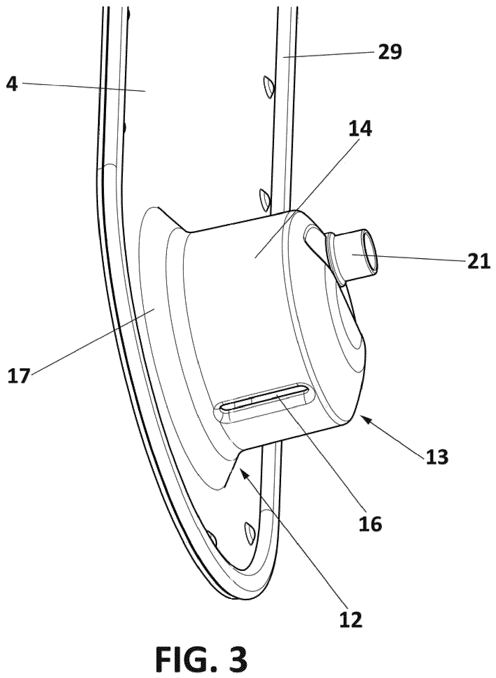

Figure 3 shows a perspective view of a tubular element (11) arranged on a plate (4). The tubular element (11) is cylindrical and is provided with an open end (12), a closed end (13), and a central sector (14) therebetween, wherein the closed end (13) comprises an inlet hole (15) which is arranged at the height of the inlet cavity (8), allowing water to enter the inside of the tubular element (11).

The open end (12) contacts the plate (4) and the central sector (14) comprises a lower through opening (16) through which heated water is discharged to the rest of the tank (6). A chamber is therefore created inside the tubular element (11) which slows down the flow of water towards the outlet cavity (8).

It can also be seen that the tubular element (11) comprises a conical lip (17) which extends along the perimeter from the open end (12) which describes a widening towards the plate (4) and is in contact with same. Likewise, a bushing (21) which is housed centered inside the inlet adapter (19) extends from the inlet hole (15).

The tubular element (11) comprises in its central sector (14) a through hole (18), visible in the preceding figure, intended for evacuating the incoming air from the water inlet cavity (8) and for being arranged above the lower opening (16) according to a vertical direction in an assembled situation.

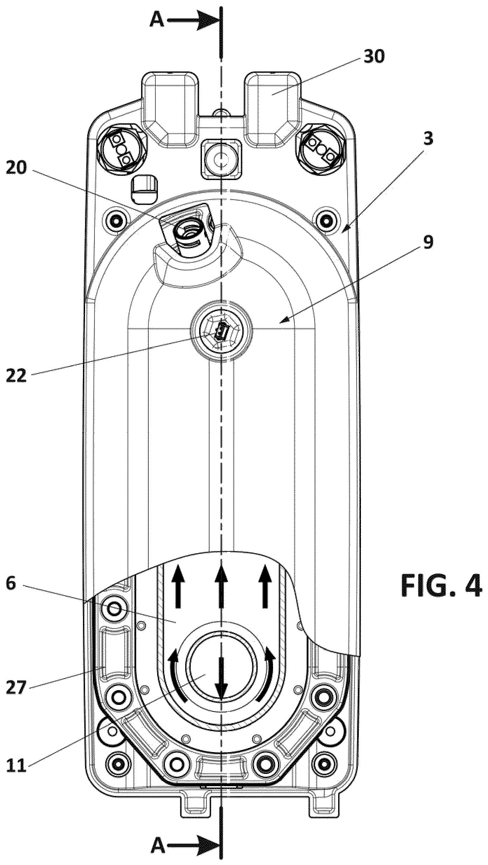

Figure 4 shows a front view of a boiler for coffee vending machines, in which the flow of water as it enters the tank (6) through the tubular element (11) towards the outlet cavity (10) and the outlet adapter (20) is shown by means of arrows.

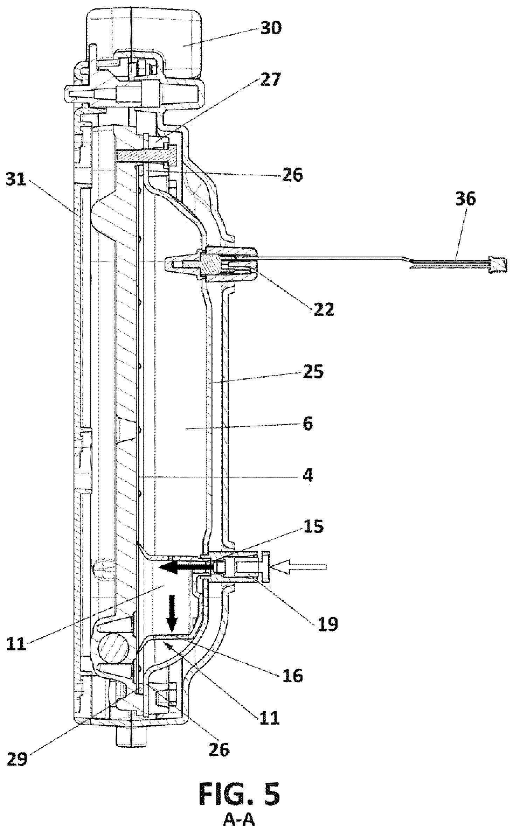

Figure 5 shows a view according to section A-A of Figure 4 of the boiler, in which it is shown that water enters through the inlet adapter (19) and through the inlet bushing (15) into the tubular element (11). From inside the tubular element (11), the water exits downwards, moving up slowly and heating up as a result of the plate (4) until the outlet cavity (10), not visible in the figure. The measurement of the water outlet temperature is obtained as a result of the temperature probe (36) housed in the blind adapter (22).

## Claims

1. - A boiler for coffee vending machines, intended for being placed vertically inside a coffee machine and for heating water to prepare coffee, that comprises:
- a first metal body (1) provided with an outer face (3) and an electrical resistance (2) which is integrated in the body and heats same;
- a metal plate (4) linked to the outer face (3) of the first body (1) receiving heat;
- a second partially convex body (5) linked on the perimeter to the outer face (3) of the first body (1) and defining with the plate (4) a water tank (6) which is provided with:
▪ a lower sector (7) provided with a through inlet cavity (8) facing the plate (4) which extends from the tank (6) and is intended for being connected to a water network and for introducing water into the tank (6);
▪ an upper sector (9) opposite the lower sector (7) and intended for being located above the lower sector (7) according to a vertical direction in an assembled situation and which is provided with a through water outlet cavity (10) which extends from the tank (6) and is intended for being connected with a distribution mechanism of the coffee machine and for discharging/evacuating the heated water,
wherein:
- the plate (4) is flat, **characterized in that**:
- the outer surface (3) of the first metal body (1) comprises a first central area (23) and a first perimeter area (24) surrounding same, wherein the first central area (23) is flat and depressed with respect to the perimeter area (24) and the plate (4) is linked to the first central area (23) and with the first perimeter area (24) protruding from said plate (4),
- the second partially convex body (5) comprises a second central area (25) in the shape of a longitudinal half-shell, from which a second perimeter area (26) which is linked to the first perimeter area (24) extends in an assembled situation, and
- the boiler comprises at least one reinforcement (27) which can be linked to the second perimeter area (26) by means of attachment elements (28).

2. The boiler according to claim 1, wherein the second partially convex body (5) further comprises a blind adapter (22) which extends towards the inside of the tank (6) and is arranged in the proximity of the water outlet cavity (10) and the boiler comprises a temperature probe (36) which can be housed in the blind adapter (22).

3. The boiler according to claim 1, comprising a compressible O-ring (29) arranged on the perimeter between the plate (4) and the partially convex second body (5), and is limited by the first perimeter area (24).

4. The boiler according to claim 1, comprising two casings (30, 31) made of polymeric material linked to one another in an assembled situation and surrounding the bodies (1, 5).

5. The boiler according to claim 1, wherein the first metal body (1) is made of aluminium and wherein the second partially convex body (5) and the plate (4) are made of stainless steel.

6. The boiler according to claim 1, comprising a cylindrical tubular element (11) provided with an open end (12), a closed end (13), and a central sector (14) therebetween, wherein the closed end (13) comprises an inlet hole (15) which is arranged at the height of the inlet cavity (8), allowing water to enter the inside of the tubular element (11), and the open end contacts the plate (4) and wherein the central sector (14) comprises a lower through opening (16) through which heated water is discharged.

7. The boiler according to claim 6, wherein the tubular element (11) comprises a conical lip (17) which extends along the perimeter from the open end (12) and describes a widening towards the plate (4) and is in contact with same.

8. The boiler according to claim 6, wherein the tubular element (11) comprises in its central sector (14) a through hole (18) intended for evacuating the incoming air from the water inlet cavity (8) and for being arranged above the lower opening (16) according to a vertical direction in an assembled situation.

9. The boiler according to claim 1, wherein the second partially convex body (5) comprises an inlet adapter (19) extending around the inlet cavity (8) and an outlet adapter (20) extending from outlet cavity (10).

10. The boiler according to claim 9, wherein a bushing (21) which is housed centered inside the inlet adapter (19) extends from the inlet hole (15).

11. The boiler according to claim 1, wherein the attachment elements (28) are screws.

## Patentansprüche

1. Boiler für Kaffeeautomaten, der dazu vorgesehen ist, vertikal in einen Kaffeeautomaten eingebaut zu werden und Wasser zu erhitzen, um Kaffee zuzubereiten, der Folgendes umfasst:
- einen ersten Metallkörper (1), der mit einer Außenfläche (3) und einem im Körper integrierten elektrischen Widerstand (2) versehen ist, der diesen erwärmt;
- eine Metallplatte (4), die mit der Außenfläche (3) des ersten Körpers (1) verbunden ist und Wärme aufnimmt;
- einen zweiten, teilweise konvexen Körper (5), der am Umfang mit der Außenfläche (3) des ersten Körpers (1) verbunden ist und mit der Platte (4) einen Wassertank (6) bildet, der Folgendes aufweist:
▪ einen unteren Bereich (7), der mit einem durchgehenden Einlasshohlraum (8) versehen ist, welcher der Platte (4) zugewandt ist, sich vom Tank (6) aus erstreckt und dazu vorgesehen ist, an ein Wassernetz angeschlossen zu werden und Wasser in den Tank (6) einzuleiten;
▪ einen oberen Bereich (9) gegenüber dem unteren Bereich (7), der dazu vorgesehen ist, sich im montierten Zustand in vertikaler Richtung über dem unteren Bereich (7) zu befinden, und der mit einem durchgehenden Wasserauslasshohlraum (10) versehen ist, der sich vom Tank (6) aus erstreckt und dazu vorgesehen ist, mit einem Verteilungsmechanismus der Kaffeemaschine verbunden zu werden und das erhitzte Wasser abzugeben/abzuführen,
wobei:
- die Platte (4) flach ist, **dadurch gekennzeichnet, dass**:
- die Außenfläche (3) des ersten Metallkörpers (1) einen ersten mittleren Bereich (23) und einen diesen umgebenden ersten Umfangsbereich (24) umfasst, wobei der erste mittlere Bereich (23) flach und gegenüber dem Umfangsbereich (24) vertieft ist und die Platte (4) mit dem ersten mittleren Bereich (23) verbunden ist und der erste Umfangsbereich (24) von der Platte (4) absteht,
- der zweite teilweise konvexe Körper (5) einen zweiten mittleren Bereich (25) in Form einer länglichen Halbschale umfasst, von dem aus sich im zusammengebauten Zustand ein zweiter Umfangsbereich (26) erstreckt, der mit dem ersten Umfangsbereich (24) verbunden ist, und
- der Boiler mindestens eine Verstärkung (27) umfasst, die mittels Befestigungselementen (28) mit dem zweiten Umfangsbereich (26) verbunden werden kann.

2. Boiler nach Anspruch 1, wobei der zweite teilweise konvexe Körper (5) ferner einen Blindadapter (22) umfasst, der sich in das Innere des Tanks (6) erstreckt und in der Nähe des Wasserauslasshohlraums (10) angeordnet ist, und wobei der Boiler einen Temperaturfühler (36) umfasst, der in dem Blindadapter (22) untergebracht werden kann.

3. Boiler nach Anspruch 1, umfassend einen komprimierbaren O-Ring (29), der am Umfang zwischen der Platte (4) und dem teilweise konvexen zweiten Körper (5) angeordnet ist und durch den ersten Umfangsbereich (24) begrenzt wird.

4. Boiler nach Anspruch 1, umfassend zwei Gehäuse (30, 31) aus Polymermaterial, die im zusammengebauten Zustand miteinander verbunden sind und die Körper (1, 5) umgeben.

5. Boiler nach Anspruch 1, wobei der erste Metallkörper (1) aus Aluminium besteht und wobei der zweite teilweise konvexe Körper (5) und die Platte (4) aus Edelstahl bestehen.

6. Boiler nach Anspruch 1, umfassend ein zylindrisches rohrförmiges Element (11), das mit einem offenen Ende (12), einem geschlossenen Ende (13) und einem dazwischenliegenden mittleren Bereich (14) versehen ist, wobei das geschlossene Ende (13) eine Einlassöffnung (15) umfasst, die auf Höhe des Einlasshohlraums (8) angeordnet ist und den Eintritt von Wasser in das Innere des rohrförmigen Elements (11) ermöglicht, und wobei das offene Ende die Platte (4) berührt, und der mittlere Bereich (14) eine untere Durchgangsöffnung (16) umfasst, durch die erhitztes Wasser abgegeben wird.

7. Boiler nach Anspruch 6, wobei das rohrförmige Element (11) eine konische Lippe (17) umfasst, die sich vom offenen Ende (12) entlang des Umfangs erstreckt, sich zur Platte (4) hin erweitert und mit dieser in Kontakt steht.

8. Boiler nach Anspruch 6, wobei das rohrförmige Element (11) in seinem mittleren Bereich (14) eine Durchgangsöffnung (18) umfasst, die dazu vorgesehen ist, die einströmende Luft aus dem Wassereinlasshohlraum (8) abzuführen und im montierten Zustand in vertikaler Richtung über der unteren Öffnung (16) angeordnet ist.

9. Boiler nach Anspruch 1, wobei der zweite teilweise konvexe Körper (5) einen Einlassadapter (19) umfasst, der sich um den Einlasshohlraum (8) herum erstreckt, und einen Auslassadapter (20), der sich vom Auslasshohlraum (10) aus erstreckt.

10. Boiler nach Anspruch 9, wobei sich eine Buchse (21), die mittig im Einlassadapter (19) untergebracht ist, von der Einlassöffnung (15) aus erstreckt.

11. Boiler nach Anspruch 1, wobei die Befestigungselemente (28) Schrauben sind.

## Revendications

1. Chauffe-eau pour distributeurs automatiques de café, destiné à être placé verticalement à l'intérieur d'une machine à café et à chauffer de l'eau pour préparer du café, qui comprend :
- un premier corps métallique (1) pourvu d'une face externe (3) et d'une résistance électrique (2) qui est intégrée dans le corps et le chauffe ;
- une plaque métallique (4) reliée à la face externe (3) du premier corps (1) recevant de la chaleur ;
- un second corps partiellement convexe (5) relié sur le périmètre à la face externe (3) du premier corps (1) et définissant avec la plaque (4) un réservoir d'eau (6) qui est pourvu de :
▪ un secteur inférieur (7) pourvu d'une cavité d'entrée traversante (8) faisant face à la plaque (4), qui s'étend à partir du réservoir (6) et est destinée à être raccordée à un réseau d'eau et à introduire de l'eau dans le réservoir (6) ;
▪ un secteur supérieur (9) opposé au secteur inférieur (7) et destiné à être situé au-dessus du secteur inférieur (7) selon une direction verticale dans une situation assemblée et qui est pourvu d'une cavité traversante de sortie d'eau (10), qui s'étend à partir du réservoir (6) et est destinée à être raccordée à un mécanisme de distribution de la machine à café et à décharger/évacuer l'eau chauffée,
dans lequel :
- la plaque (4) est plate, **caractérisé en ce que** :
- la surface externe (3) du premier corps métallique (1) comprend une première zone centrale (23) et une première zone de périmètre (24) l'entourant, dans lequel la première zone centrale (23) est plate et en retrait par rapport à la zone de périmètre (24) et la plaque (4) est reliée à la première zone centrale (23) et avec la première zone de périmètre (24) faisant saillie à partir de ladite plaque (4),
- le second corps partiellement convexe (5) comprend une seconde zone centrale (25) sous la forme d'une demi-coque longitudinale, à partir de laquelle une seconde zone de périmètre (26), qui est reliée à la première zone de périmètre (24), s'étend dans une situation assemblée, et
- le chauffe-eau comprend au moins un renfort (27) qui peut être relié à la seconde zone de périmètre (26) au moyen d'éléments de fixation (28).

2. Chauffe-eau selon la revendication 1, dans lequel le second corps partiellement convexe (5) comprend en outre un adaptateur borgne (22) qui s'étend vers l'intérieur du réservoir (6) et est agencé à proximité de la cavité de sortie d'eau (10) et le chauffe-eau comprend une sonde de température (36) qui peut être logée dans l'adaptateur borgne (22).

3. Chauffe-eau selon la revendication 1, comprenant un joint torique compressible (29) agencé sur le périmètre entre la plaque (4) et le second corps partiellement convexe (5), et est limité par la première zone de périmètre (24).

4. Chauffe-eau selon la revendication 1, comprenant deux boîtiers (30, 31) constitués d'un matériau polymère reliés l'un à l'autre dans une situation assemblée et entourant les corps (1, 5).

5. Chauffe-eau selon la revendication 1, dans lequel le premier corps métallique (1) est constitué d'aluminium et dans lequel le second corps partiellement convexe (5) et la plaque (4) sont constitués d'acier inoxydable.

6. Chauffe-eau selon la revendication 1, comprenant un élément tubulaire cylindrique (11) pourvu d'une extrémité ouverte (12), d'une extrémité fermée (13) et d'un secteur central (14) entre celles-ci, dans lequel l'extrémité fermée (13) comprend un trou d'entrée (15) qui est agencé à la hauteur de la cavité d'entrée (8), permettant à l'eau de pénétrer à l'intérieur de l'élément tubulaire (11), et l'extrémité ouverte est en contact avec la plaque (4) et dans lequel le secteur central (14) comprend une ouverture traversante inférieure (16) à travers laquelle l'eau chauffée est déchargée.

7. Chauffe-eau selon la revendication 6, dans lequel l'élément tubulaire (11) comprend une lèvre conique (17) qui s'étend le long du périmètre à partir de l'extrémité ouverte (12) et décrit un élargissement vers la plaque (4) et est en contact avec celle-ci.

8. Chauffe-eau selon la revendication 6, dans lequel l'élément tubulaire (11) comprend dans son secteur central (14) un trou traversant (18) destiné à évacuer l'air entrant à partir de la cavité d'entrée d'eau (8) et à être agencé au-dessus de l'ouverture inférieure (16) selon une direction verticale dans une situation assemblée.

9. Chauffe-eau selon la revendication 1, dans lequel le second corps partiellement convexe (5) comprend un adaptateur d'entrée (19) s'étendant autour de la cavité d'entrée (8) et un adaptateur de sortie (20) s'étendant à partir de la cavité de sortie (10).

10. Chauffe-eau selon la revendication 9, dans lequel une douille (21) qui est logée centrée à l'intérieur de l'adaptateur d'entrée (19) s'étend à partir du trou d'entrée (15).

11. Chauffe-eau selon la revendication 1, dans lequel les éléments de fixation (28) sont des vis.
